# EUROPEAN PATENT SPECIFICATION

(11) **EP 2 274 412 B1**
(45) Date of publication and mention of the grant of the patent: **16.05.2012**
(21) Application number: 09727008.6
(22) Date of filing: 31.03.2009
(51) Int. Cl.: C12M 1/24, C02F 1/02

(54) **AN APPARATUS AND A METHOD FOR CONTINUOUS THERMAL HYDROLYSIS OF BIOLOGICAL MATERIAL**
VORRICHTUNG UND VERFAHREN ZUR KONTINUIERLICHEN THERMISCHEN HYDROLYSE VON BIOLOGISCHEM MATERIAL
APPAREIL ET PROCÉDÉ D HYDROLYSE THERMIQUE CONTINUE DE MATÉRIEL BIOLOGIQUE

(30) Priority: 31.03.2008 EP 08153824
(43) Date of publication of application: 19.01.2011
(73) Proprietor: Veolia Water Solutions & Technologies Support, 94410 Saint-Maurice (FR)
(72) Inventor: HØJSGAARD, Søren Johannes, DK-3400 Hillerød (DK)
(74) Representative: Inspicos A/S
(86) International application number: PCT/EP2009/053802
(87) International publication number: WO 2009/121873

(56) References cited:
- EP-A- 0 146 526
- EP-A- 0 325 720
- EP-A- 0 417 829
- EP-A- 1 198 424
- WO-A-00/73221
- WO-A-92/06925
- WO-A-96/09882
- WO-A-03/043939
- US-A1- 2004 060 863
- US-A1- 2004 168 990

## Description

### FIELD OF THE INVENTION

The present invention relates to a method of and an apparatus for performing continuous thermal hydrolysis of biological material.

### BACKGROUND OF THE INVENTION

In most parts of the world waste water from house holds, industrial processes and agriculture is biologically treated prior to emission into streams, creeks and rivers. This is done in order to prevent certain biological contents to contaminate said streams, creeks and rivers.

Such treatment can be biological degrading wherein biological particles are degraded. However certain biological particles are harder to degrade than others, and thus it is known to speed up the degrading process by treating the biological material by heating biological material comprising the biological material and maintaining it at a temperature of about 140-160 degrees Celsius for a predetermined period of time such as for at least half an hour. Such a process is known as thermal hydrolysis and causes biological material which exhibits reliance to biological degrading to be turned into material which is easily degradable.

Such thermal hydrolysis is normally performed in a batch process in which batches of sludge is subjected to thermal hydrolysis and subsequently fed into a digester. However, it is desirable to be able to perform the thermal hydrolysis in as a continuous process.

An example of such a continuous process is disclosed in EP 1 198 424 which discloses a method in which sludge with a dry solids content of 1-20% is fed into a reactor. The sludge is maintained in the reactor for a period of 5-60 minutes at a temperature of 130-180 degrees Celsius and at a pressure of 3-10 Bar.

Subsequently, the treated biological material is cooled by means of a heat exchanger so as to ensure that the temperature of the sludge is sufficiently low to avoid bacteria in the digester to be destroyed. In order to recover energy, the heat exchanger is often arranged to preheat the sludge prior to being fed into the reactor.

Further background art may be found in WO 96/09882, WO 2006/027062, WO 92/06925 and WO 2004/096866.

It is an object of an embodiment of the present invention to provide a system for continuous thermal hydrolysis adapted to treat sludge with a dry solids content of at least 20%.

Furthermore, it is an object of an embodiment of the present invention to provide a system for continuous thermal hydrolysis in which no heat exchanger is needed to cool down the sludge.

Moreover, it is an object of an embodiment of the present invention to provide a system in which cooling of the biological material causes no or little depositing of particles on the inner surfaces of the tube reactor.

Furthermore, it is an object of yet another embodiment of the present invention to provide a system adapted to prevent depositing of particles in supply lines such as steam supply lines, connected to a reactor for thermal hydrolysis.

### DESCRIPTION OF THE INVENTION

In a FIRST aspect, the present invention relates to a method for performing continuous thermal hydrolysis of sludge comprising organic material in a tube reactor by continuously:
- feeding the organic material into a feeding zone of the reactor, so as to increase the pressure and allow a temperature above 100 degrees Celsius without boiling of the organic material;
- feeding steam into the reactor in a steam feeding zone, so as to increase the temperature to a temperature above 100 degrees;
- maintaining the pressure in the reactor for a predetermined period of time,
- feeding water into the reactor in a cooling zone so as to decrease the temperature to a temperature below 100 degrees, and
- outputting the organic material in an outputting zone.

One advantage of the system according to the present invention is that no or little depositing of substances such as vivianite and/or struvite, occur. Such depositing normally occur when the biological material is cooled down to an extend causing the concentration of a given chemical substance to be supersaturated due to solubility decreasing with decreasing temperature. Supersaturation will normally result in depositing an amount of the chemical substance sufficient to cause the substance reach its new saturation level.

In the present invention, the sludge is cooled down by injecting cooling water, and thus the biological material is cooled down inside the tube reactor and not along its inner surfaces. In conventional systems, the biological material is cooled by means of a heat exchanger which is adapted to cool down one or more inner surfaces of the tube reactor, whereby the sludge contacting said surface(s) is/are cooled down. However as the inner surfaces are cooled down, the sludge positioned in the area of or contacting said colder inner surfaces will deposit the particles on said surfaces as the biological material is cooled and passes the abovementioned temperature. The consequence is that such systems must be cleaned frequently in order to function properly.

Another advantage of the present invention is that the dry solids content of the biological material fed into the system may be higher, as the biological material is thinned at a point downstream sludge feeding inlet. Due to the higher level of dry solids content, the capacity of the system of the present invention is large relative to known systems comprising a heat exchanger for cooling the biological material to a temperature suitable for processing in a subsequent digester.

Yet another advantage of the present invention may be that the high temperature and the increased pressure may lead to desired chemical reactions, such as enzymatic hydrolysis of long chain carbon molecules.

In the context of the present invention the term "biological material" shall be understood as any material of biological origin and which contain organic material. Examples are waste from industrial processes, waste from processes in agriculture/farming (including manure and waste from slaughterhouses) and sludge obtained from treatment of wastewater from households, industries and/or agriculture/farming.

The tube reactor will in most embodiments be elongated so as to allow biological material to be fed into one end at predetermined velocity and gradually be moved inside the tube reactor while maintaining the process temperature and pressure. It will be appreciated that for a given feeding rate (mass per unit of time), the retention time is longer for a thicker tube reactor than for a thinner reactor - provided that the length of the reactor remains the same. Additionally, it will be appreciated that for a given fed rate, thickness (diameter) and the length of the reactor determines the retention time.

The tube reactor may comprise at least one horizontal part in which the biological material flows in a horizontal direction, and/or at least one vertical part in which the biological material flows in a vertical direction. As an example the entire tube reactor may extend in a horizontal direction or the entire tube reactor may extend in a vertical direction.

In one embodiment, a vertical part is provided upstream a horizontal part and the steam feeding zone is provided in the lower part of the vertical part. Due to the buoyancy of steam relative to the biological material, the provision of the steam feeding zone in the lower part of the vertical part causes the steam and the biological material to be mixed in a better way than when the steam feeding zone is provided in a horizontal part. The reason is that when the steam feeding zone is provided in a horizontal part, the steam and the biological material may have a tendency to separate into two layers - an upper comprising the steam, and a lower comprising the biological material.

In the context of the present invention the term "vertical part" of the tube reactor shall designate any part of the reactor which has a vertical geometrical component. Accordingly, the vertical part will extend in a direction transverse to the horizontal direction.

In one particular embodiment, namely when the vertical part is arranged exactly vertically, the "vertical part" only has a vertical geometrical component and no horizontal geometrical component. In other embodiments, the vertical part may be provided at an angle different from 0 and 90 degrees relative to the vertical orientation. Examples are 30 degrees relative to the vertical orientation, such as 45 degrees, such as 60 degrees.

In the context of the present invention the term "horizontal part" of the tube reactor shall designate any part of the reactor which has a horizontal geometrical component. Accordingly, the vertical part will extend in a direction transverse to the vertical direction.

In one particular embodiment, namely when the horizontal part is arranged exactly horizontally, the "horizontal part" only has a horizontal geometrical component and no vertical geometrical component. In other embodiments, the horizontal part may be provided at an angle different from 0 and 90 degrees relative to the horizontal orientation. Examples are 30 degrees relative to the vertical orientation, such as 45 degrees, such as 60 degrees.

Static or dynamic mixers may be provided in the area of or downstream the steam feeding zone so as to improve the mixing of the steam and the biological material. One effect is that the temperature is homogenised. It will be appreciated that such static or dynamic mixers are highly advantageous when the steam feeding zone is provided in a horizontal part. Moreover, it will be appreciated that the provision of static or dynamic mixers in a vertical part causes the steam and the biological material to be mixed in an improved way.

The steam feeding zone may be provided in the lower half of a vertical part, such as in the lower third, such as in the lower fourth, such as in the lower fifth. In one embodiment, the steam feeding zone is provided in the bottom of the vertical part.

In one embodiment, a plurality of static and/or dynamic mixers is provided between the steam feeding zone and the cooling zone. Such mixers may be evenly distributed (i.e. substantially equidistantly spaced apart) or the mixers may be provided in groups. The plurality of mixers may comprise two mixers, or three mixers, or four mixers, or five mixers, or six mixers or ten mixers. In one embodiment, the reactor tube is designed such that the content of the tube is mixed along the entire length of the tube. This may be achieved by providing a plurality of mixers which are spaced apart at a small distance such as 10 cm, such as 20 cm, such as 30 cm, such as 40 cm, such as 50 cm, such as 1 meter.

The reactor may be adapted to prevent backflow of the cooling water in an upstream direction of the reactor. This may be achieved by providing a unidirectional valve upstream the cooling zone. Alternatively, or as a supplement, a restriction such as a vertical wall may be provided upstream the cooling zone in a horizontal part of the reactor. The restriction may be provided in the lower part of the reactor. Alternatively, or as a supplement, the reactor may form a vertical part upstream the cooling zone.

In one embodiment, the reactor comprises first and second vertical parts between which a horizontal part is provided, such that the first vertical part is provided upstream the horizontal part and the second vertical part is provided downstream the horizontal part. In this embodiment, the steam feeding zone may be provided in the lower part of the first vertical part and the cooling zone may be provided in the second vertical part e.g. in the lower part thereof. In an alternative embodiment, a further horizontal part may be provided downstream the second vertical part and the cooling zone is provided is this further horizontal part.

In one embodiment the length of the tube reactor is in the range of 5 to 50 meters, such as in the range of 10-40 meters, such as in the range 20-30 meters. In one embodiment the diameter of the tube reactor is in the range 50-500 mm, such as in the range 100-400 mm, such as in the range 200-300 mm.

In the context of the present invention the term "continuous thermal hydrolysis" shall be understood as a process wherein thermal hydrolysis is undertaken while new unprocessed biological material is fed into the system while at the same time processed biological material exits the system.

The pressure of the steam fed into the tube reactor may be above 2 Bar, such as above 5 Bar, such as above 10 Bar, such as above 15 Bar, or such as above 20 Bar.

In one embodiment the tube reactor is designed so as to allow the predetermined retention time to be above 5 minutes, such as above 20 minutes, such as above 30 minutes, such as above 45 minutes, such as above 60 minutes, such as above 90 minutes, such as above 180 minutes.

In one embodiment, the method comprises the step of feeding a chemical agent into at least one chemical feeding zone of the reactor. In one embodiment, a chemical feeding zone is provided upstream a steam feeding zone. Alternatively, a chemical feeding zone may be provided down stream a steam feeding zone. In yet another embodiment, a chemical feeding zone is provided upstream a cooling zone and/or a chemical feeding zone is provided downstream a cooling zone. The injected chemical may be an alkali such as NaOH, which may be injected so as to boost the hydrolysis reaction of long chain organics (such as Lignocellulosic components of biomass and microbial cell wall components). Alternatively, or as a supplement, the alkali may be injected so as to allow the hydrolysis to take place at a reduced temperature (such as 120 degrees Celsius) and/or at a reduced pressure (such as 7 Bar).

The alkali may be added when the apparatus is used for pre-hydrolysis of greasy waste such as fatty waste from the food industry or from municipal activity.

In another embodiment, a chemical is added for acidification for removal of heavy metal from the biological material. Hydrolysis in acidic conditions may solubilise metals absorbed in the biological material. of e.g. an industrial waste water treatment plant. After the thermal hydrolysis, the liquid phase may be separated from the solid fraction so as to allow separate precipitation and removal of the metal from the liquid and so as to allow the solid phase to be send to an anaerobic digester after pH-neutralization.

In yet another embodiment, the chemical injected is an oxidizing agent such as H2O2 or 03 or peracetic acid. The oxidizing agent may or may not comprise a mineral acid or an alkali for pH adjustment. Provision of an oxidizing agent may reduce the toxicity effect of some organics such as BTEX (Benzene, Toluene, Ethyl benzene, Xylene) or chlorinated components like PCB (Poly Chloro Biphenyls). Accordingly biological material which is not acceptable for agricultural land spreading due to harmful organics such as PCB, may be detoxified by means of the apparatus and/or method according to the present invention.

In one embodiment water is fed into the reactor in the cooling zone so as to fulfil at least one of:
- decreasing the temperature of the biological material to a temperature below 100 degrees Celsius, and
- achieving a desired dry solids content of the treated biological material.

In one embodiment, the water is fed into the cooling zone so as to dilute the concentration in order to achieve a predetermined dry solids content which is suitable for the subsequent treatment in the digester. Such a predetermined dry solids content may be a dry solids content below 15%, such as below 12%, such as below 9%, such as below 6%. It will be appreciated that the ideal dry solids content of the biological material depends on the subsequent digester and that the dry solids content in most embodiments must be chosen such that the risk of ammonia poisoning of the digester is avoided.

In one predetermined embodiment, cooling water is fed into the cooling zone so as to dilute the biological material to a dry solids content of approximately 9%.

It should be noted that the addition of steam in the steam feeding zone also causes the dry solids content level/percentage to drop relative the level/percentage of the biological material which is fed into the tube reactor at the feeding zone.

In one embodiment the cooling water is fed into the cooling zone so as to decrease the temperature to a temperature below 100 degrees Celsius, such as below 80 degrees Celsius, such as below 60 degrees Celsius, such as below 50 degrees Celsius, such as below 40 degrees Celsius.

The water fed into the cooling zone may be in the range of 1 to 100 degrees Celsius, such as in the range of 10 to 50 degrees Celsius. The water fed into the system may be tap water and/or processed water e.g. treated waste water

It will be appreciated that in most embodiments the steam feeding zone is provided upstream the cooling zone, so as to allow the temperature of the sludge to be elevated prior to cooling it down.

In one embodiment, the reactor comprises more than one cooling zone e.g. provided in continuation of each other. As an example two or more cooling zones may be provided in a vertical part of the rector such as the second vertical part described above. Additionally, the reactor may comprise more than one steam feeding zone, e.g. provided in continuation of each other. As an example two or more steam feeding zones may be provided in a vertical part of the reactor such as in the first vertical part described above.

In one embodiment, the organic material is continuously fed from the feeding zone to the output zone via the steam feeding zone and the cooling zone.

In one embodiment the reactor is designed and controlled such that a predetermined period of time elapses when the organic material is fed from the steam feeding zone to the cooling zone. The predetermined time may be at least 20 minutes, such as at least 30 minutes, such as at least 45 minutes, such as at least 60 minutes. In one embodiment, the predetermined time may be in the range of 20 to 120 minutes, such as in the range of 30 to 60 minutes.

The system may comprise a controller for controlling one or more of the feeding speed, the temperature and the pressure of the steam fed into the system, the temperature and the pressure of the cooling water fed into the system so as to cool down the biological material.

In one particular embodiment, the amount of injected steam is adjusted to the incoming flow of waste material/sludge, such that the desired temperature is obtained.

As mentioned previously, the present invention provides a system wherein biological material with a large content of dry solids may be fed into the system, e.g. such that the organic material provides a dry solid content of 1-50%, such an 10-40 percent in the sludge fed into the feeding zone. In another embodiment, the biological material defines at least 20 percent of the sludge, such as at least 25 percent, such as at least 30 percent, such as at least 35 percent, such as at least 40 percent.

It will be appreciated that upon injection of the steam, the percentage of the biological dry solids content decreases slightly.

In one particular embodiment, the liquid sludge may - upon processing in the tube reactor - enter a digester with a dry solids content of approximately 9 percent. Once located in the digester, the sludge may have a retention time of at least one week, such as at least two weeks, such as at least four weeks.

In one embodiment, a means for maintaining the pressure inside the tube reactor is provided in the area of the outlet of the tube reactor. Said means for maintaining the pressure is adapted to allow biological material to exit the tube reactor via the outlet while maintaining the desired pressure. In other words, the means for maintaining the pressure is adapted to allow the biological material to exit the tube reactor without the pressure dropping below the minimum pressure needed for the process in the tube reactor to take place. The means for maintaining the pressure may take the form of a pressure valve e.g. comprising a spring biased element which causes the valve to be closed unless the pressure is above a predetermined level. In an alternative embodiment, the means for maintaining the pressure takes the form of a progressing cavity pump arranged to rotate so as to cause the biological material to be moved out of the tube reactor while maintaining the desired minimum pressure.

In a SECOND aspect the present invention relates to an apparatus for continuous hydrolysis of sludge comprising an organic material, the apparatus comprising a tube reactor with:
- at least one inlet for feeding sludge into the reactor in a feeding zone thereof,
- at least one inlet for feeding steam into the reactor in a steam feeding zone thereof,
- at least one inlet for feeding cooling water into the reactor in a cooling zone thereof, and
- at least one outlet for allowing processed sludge to exit the reactor.

The invention according to the second aspect may comprise any combination of features and/or elements of the invention according to the first aspect.

As an example the apparatus may comprise a control unit which is adapted control feeding of steam into the steam feeding zone, so as to elevate the pressure and to allow a temperature above 100 degrees Celsius without boiling of biological material in the pipe reactor.

As another example, the reactor may comprise static or dynamic mixers as is described under the first aspect of the invention. As yet another example, the reactor may comprise horizontal and/or vertical parts as is described under the first aspect.

Alternatively, or as a supplement the control unit is adapted to control feeding of cooling water into the cooling zone, so as to decrease the temperature to a point below 100 degrees Celsius.

In one embodiment, the reactor comprises an inlet for feeding a chemical agent into the reactor in a chemical feeding zone thereof.

In one embodiment, the reactor is adapted to prevent backflow of the cooling water in an upstream direction of the reactor.

The above described examples from the first aspect which also applies to the second aspect of the invention are only examples and any feature and/ element of the first aspect applies to the second aspect.

In a third aspect, the present invention relates to the use of the method and/or apparatus according to the first and second aspect, respectively, for preparing biological material for the manufacture of a bio product such as biofuel, biochemicals or biopolymers.

When manufacturing such products, the raw biomass may be difficult to convert into valuable products, and therefore generally a first step in the manufacture of such products may be a thermal hydrolysis of the raw biomass. Such use of thermal hydrolysis components of the raw biological material makes them more amenable to chemical and/or biological transformation into a final bio-product.

This hydrolysis process may be undertaken at a temperature in the range of 100-200 degrees Celsius, and/or at a pressure of 1-12 Bar and/or at a predetermined period of time such as 0-5 hours. Moreover, the process may be undertaken with or without addition of aqueous chemical treatments and with the previously mentioned solids concentration of the biological material.

In a fourth aspect, the present invention relates to the use of the method and/or the apparatus according to the first and the second aspect, respectively, for pasteurization of biological material.

In one embodiment, the pasteurization process comprises a step of heating of the biological material to a predetermined temperature such as a temperature above 70 degrees Celsius. Moreover, the pasteurization process may comprise a step of maintaining the temperature for a predetermined period of time such as one hour.

### BRIEF DESCRIPTION OF THE FIGURES

The invention will now be described in further detail with reference to the drawings, in which:
Fig. 1 discloses an embodiment of the system for continuous thermal hydrolysis according to the present invention,

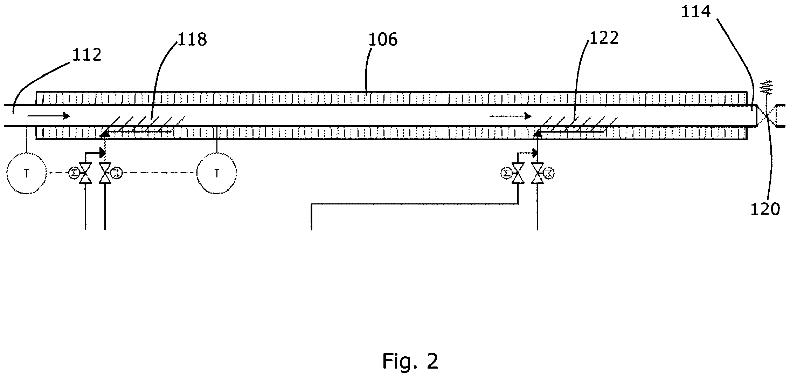

Fig. 2 discloses a tube reactor according to the present invention, and
Fig. 3 discloses an embodiment of the tube reactor according to the present invention.

### DETAILED DESCRIPTION OF THE FIGURES

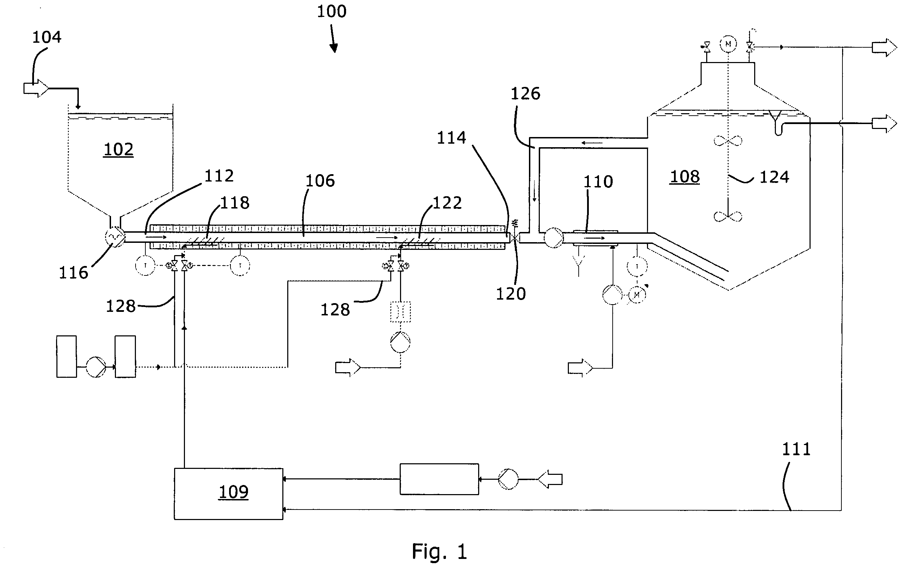

Fig. 1 discloses a sludge treatment system 100 for treating biological material. The sludge treatment system 100 comprises a reservoir 102 which is suitable for containing biological material and which is fluidly connected to a biological material supply system 104. The temperature of the biological material may be in the range of 0 to 100 degrees Celsius. The biological material may have a dry solids content of biological material of at least 20 %. The sludge treatment system 100 further comprises a tube reactor 106, and a digester 108. The reservoir 102 is fluidly connected to the digester 108 via the tube reactor 106 and a cooler 110 (which is optional and not necessary for the system to function). The tube reactor 106 comprises a sludge inlet 112 through which the sludge may be fed into the tube reactor 106, and a sludge outlet 114 though which the sludge exits the tube reactor 106 after a predetermined treatment period, such as 5 minutes to 5 hours, such as 30 minutes, such as 60 minutes, such as 2 hours, such as 3 hours, such as 4 hours.

In one embodiment the length of the tube reactor is of 5 to 50 meters, such as 10 meters, such as 20 meters, such as 30 meters, such as 40 meters. In one embodiment the diameter of the tube reactor is in the range 50-500 mm, such as 100 mm, such as 200 mm, such as 300 mm, such as 400 mm. In one embodiment of the invention, the diameter of the tube reactor is one meter, such as two meters, such as three meters, such as four meters, such as five meters. In one embodiment of the invention the length of the tube reactor is one hundred meters, such as two hundred meters, such as three hundred meters, such as four hundred meters, such as five hundred meters.

During use the sludge contained in the reservoir 102 is fed into the tube reactor 106 by means of a feeder 116 for feeding the sludge into the tube reactor 106 via the sludge inlet 112.

The feeder 116 may be adapted to force the sludge into the tube reactor 106 so as to increase the pressure inside the tube reactor 106. It will be appreciated when the pressure inside the reactor is increased, the temperature of the sludge inside the tube reactor 106 may be elevated to a temperature above 100 degrees Celsius without causing the sludge to boil.

The sludge treatment system 100 comprises a steam feeding inlet 118, through which steam is fed into the tube reactor 106, so as to increase the temperature to a temperature above 100 degrees Celsius. As the pressure in the tube reactor 106 has been increased by means of the feeder 116, the temperature may be elevated to a point above 100 degrees Celsius without causing the content in the tube reactor 106 to boil. In some embodiments, the steam fed into the tube reactor 106 is fed into the tube reactor 106 at a pressure of at least 15 Bar.

In one embodiment at least a part of the gas produced in the digester 108, is used to heat water so as to produce the steam. Accordingly, at least a part of the gas may be fed into a steam generator 109 via a gas supply system 111.

Due to the outlet pressure valve 120 a predetermined pressure may be maintained inside the tube reactor while the sludge is fed from the sludge inlet 112 towards the sludge outlet 114. Said predetermined pressure must be a pressure sufficiently high to avoid boiling as boiling of the content in the tube reactor 106 will damage the reactor.

Moreover, the tube reactor 106 comprises means for thermally insulating tube reactor 106 relative to the ambient temperature. Accordingly the sludge may maintain substantially the same temperature during its passage from the sludge inlet 112 towards the sludge outlet 114 without adding further heat to the process.

In most embodiments, the pressure downstream the outlet pressure valve 120 is equal to or substantially equal to atmospheric pressure. Accordingly, it will be appreciated that the temperature of the sludge must be lowered prior to passing through the outlet pressure valve 120, in order to prevent the sludge from boiling. It will be appreciated that the temperature should be lowered to a point below the boiling point at atmospheric pressure at the site of the system, i.e. 100 degrees Celsius at sea level.

In order to decrease the temperature of the sludge, the sludge treatment system 100 comprises one or more cooling water inlets 122 for adding cooling water to the sludge. As is described previously, one advantage of adding the cooling water is that the temperature can be lowered. Another advantage is that the dry solids content of the sludge entering the tube reactor 106 may be higher than in conventional systems wherein no water is added and wherein the sludge is cooled down exclusively by means of a heat exchanger.

The sludge fed through the system according to the present invention is cooled by adding cooling water, which causes the sludge to be thinned. Accordingly, it will be appreciated that the dry solids content necessarily must be higher upstream the cooling water inlets 122 in the system according to the present invention. Thus the skilled person will readily realise, that the concentration of the sludge feed into the system of the present invention, will be higher than in conventional systems for the same concentration of dry solids content in the sludge exiting the respective system.

It will be appreciated that the cooling water fed into the cooling water inlets 122 may be tap water, processed water or any other kind of water which will not disturb or prohibit the processes which normally take place in the digester 108.

In one embodiment the dry solids content of the sludge fed into the tube reactor 106 is approximately 19 percent and the temperature is elevated to at least 150 degrees Celsius. In the latter embodiment, the retention time (i.e. the time period the sludge is maintained in the tube reactor 106) is in the range of one half or whole hour. In the latter embodiment, the dry solids content of the sludge down stream the cooling water inlets 122 is approximately 9 percent and the temperature is approximately 80 degrees Celsius.

In some embodiments, the system comprises cooler 110 for decreasing the temperature of the processed sludge even further. The cooler 110 may take the form of a heat exchanger which is used to retrieve thermal energy from the sludge, such that said thermal energy can be used to heat up sludge, e.g. prior to being fed into the sludge inlet 112.

The final process step in the system is that the sludge is fed into a digester 108 in which the bacteriological processes are initiated so as to biologically degrade the sludge.

In order to mix the processed sludge with the sludge already contained in the digester 108, the sludge treatment system 100, may comprise an agitator 124. Alternatively, or as a supplement, the sludge treatment system 100 may comprise a recirculation system 126, which is adapted to mix sludge already present in the digester 108 with sludge exiting the tube reactor 106.

As the temperature of the sludge already present in the digester 108 normally will be lower than the temperature of the sludge exiting the tube reactor 106, the recirculation system will also contribute to further cooling of the sludge exiting the tube reactor 106.

As an example, the sludge exiting the tube reactor 106 and the sludge already present in the digester 108 may be mixed in a 1:19 relation ship (i.e. each unit of the sludge exiting the tube reactor 106 is mixed with 19 units of the sludge already in the digester). If the temperature of the sludge exiting the tube reactor 106 is 80 degrees Celsius and the temperature of the sludge recycled from the digester 108 is 55 degrees Celsius, then the temperature of the sludge entering the digester from the recirculation system is approximately 56 degrees Celsius i.e. one degree higher than the sludge already present in the digester 108.

It will be appreciated that in order to prevent the temperature of the sludge in the digester 108 to gradually increase due to the higher temperature of sludge entering the digester 108, the digester 108 must be insulated accordingly, or the temperature of sludge exiting the tube reactor 106 must be adjusted accordingly.

Moreover, the system may comprise means for preventing depositing 128 (of e.g. struvite or vivianite or calcium) in supply lines fluidly connected to the tube reactor 106, i.e. in the steam feeding inlet 118 and/or the cooling water inlet 122 and/or the sludge inlet 112. Such depositing may occur during shutting down of the system. The means 128 may be adapted to pump oil such as vegetable oil into said inlets such that when one or more of said feeding inlets is/are depressurised, sludge will not be retracted into said inlets and thus possibly cause depositing in said inlets when the sludge is cooled down. The means 128 may be automatically controllable and/or manually controllable. It will be appreciated that due to the low price of mineral oil, the means 128 provides a simple and cheap way of preserving the more costly inlets.

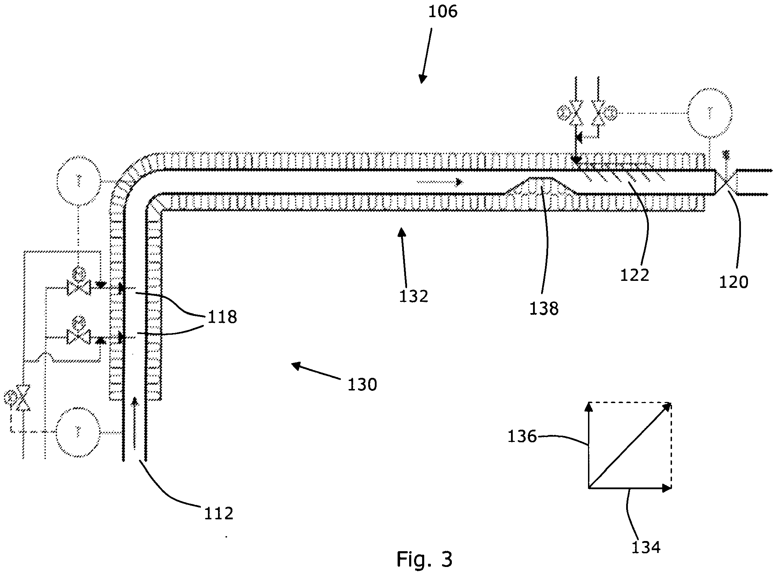

Fig. 3 discloses an embodiment of the tube reactor 106 in which the reactor 106 comprises a vertical part 130 and a horizontal part 132. In the embodiment of Fig. 3 the vertical part 130 is provided upstream the horizontal part 132. Moreover in the embodiment of the Fig. 3, the two parts 130,132 are provided at a right angle relative to each other such that the vertical part has no horizontal geometrical component 134 and such that the horizontal part has no vertical geometrical component 136.

The tube reactor comprises a sludge inlet 112 through which the biological material is fed and two steam feeding inlets 118 the lower of which is provided in the lower third of the vertical part 130 and the upper of which is provided in the lower half of the vertical part 130.

Moreover, the tube reactor 106 comprises an outlet pressure valve 120 which is provided downstream cooling water inlets 122. In order to prevent back flow of the cooling water, a means for preventing back flow 138 is provided upstream the cooling water inlets 122. In the embodiment of Fig. 3, the means for preventing back flow 138 is provided in the form of a barrier in the lower part of the tube reactor 106. However as described previously, the means 138 may be provided as a unidirectional valve.

## Claims

1. A method for performing continuous thermal hydrolysis of sludge comprising organic material in a tube reactor by continuously:
- feeding the organic material into a feeding zone of the reactor, so as to increase the pressure and allow a temperature above 100 degrees Celsius without boiling of the organic material;
- feeding steam into the reactor in a steam feeding zone, so as to increase the temperature to a temperature above 100 degrees;
- maintaining the pressure in the reactor for a predetermined period of time,
- feeding water into the reactor in a cooling zone so as to decrease the temperature to a temperature below 100 degrees, and
- outputting the organic material in an outputting zone.

2. A method according to claim 1, comprising the step of feeding a chemical agent into a chemical feeding zone of the reactor.

3. A method according to claim 1 or 2, wherein the temperature of water fed into the cooling zone is between 1 and 100 degrees.

4. A method according to any of the preceding claims, wherein the tube reactor comprises at least one horizontal part in which the biological material flows in a horizontal direction, and/or at least one vertical part in which the biological material flows in a vertical direction.

5. A method according to any of the preceding claims, wherein the steam feeding zone is provided upstream the cooling zone.

6. A method according to any of the preceding claims, wherein the organic material is continuously fed from the feeding zone to the output zone via the steam feeding zone and the cooling zone.

7. A method according to any of the preceding claims, wherein the reactor is designed and controlled such that a minimum predetermined period of time lapses when the organic material is fed from the steam feeding zone to the cooling zone.

8. A method according to any of the preceding claims, further comprising the steps of:
- approximating the dry solids content of biological material fed into the tube reactor, and
- feeding water into the cooling zone so as to ensure that the dry solids content of processed biological material exiting the tube reactor is at a predetermined level.

9. A method according to any of the preceding claims, wherein the organic material defines a dry solid content of 1-50% in the sludge which is fed into the feeding zone.

10. A method according to any of the preceding claims, wherein the organic material defines a dry solid content of at least 20% in the sludge which is fed into the feeding zone.

11. An apparatus for continuous hydrolysis of sludge comprising an organic material, the apparatus comprising a tube reactor with:
- an inlet for feeding sludge into the reactor in a feeding zone thereof,
- an inlet for feeding steam into the reactor in a steam feeding zone thereof,
- an inlet for feeding cooling water into the reactor in a cooling zone thereof, and
- an outlet for allowing processed sludge to exit the reactor.

12. An apparatus according to claim 11, wherein the reactor comprises an inlet for feeding a chemical agent into the reactor in a chemical feeding zone thereof.

13. An apparatus according to claim 11 or 12, wherein the apparatus comprises a control unit adapted to control:
- feeding of sludge into the sludge feeding zone, so as to elevate the pressure and allow a temperature above 100 degrees Celsius without boiling of biological material in the tube reactor, and
- feeding of steam into the steam feeding zone, so as to elevate the temperature.

14. An apparatus according to claim 13, wherein the reactor is adapted to prevent backflow of the cooling water in an upstream direction of the reactor.

15. An apparatus according to claim 13 or 14, wherein the control unit is adapted to control feeding of cooling water into the cooling zone, so as to decrease the temperature to a point below 100 degrees Celsius

16. An apparatus according to any of claims 11-15, wherein inlet for steam is provided upstream the inlet for cooling water.

17. An apparatus according to any of claims 13-16, further comprising means for determining the dry solids content of biological material entering the tube reactor, and wherein the control unit is adapted to feed cooling water into the cooling zone so as to ensure that biological material exiting the tube reactor has a predetermined dry solids content.

18. An apparatus according to any of claims 11-17, further comprising means for preventing depositing in one or more of the inlets of the apparatus, which means is adapted to feed an oil into the inlets when the reactor is shut down.

## Patentansprüche

1. Verfahren zur Durchführung einer kontinuierlichen Thermohydrolyse von Schlamm, umfassend organisches Material in einem Röhrenreaktor durch kontinuierliches:
- Zuführen des organischen Materials in einen Zuführungsbereich des Reaktors, um den Druck zu erhöhen und eine Temperatur von über 100 Grad Celsius zu ermöglichen, ohne Sieden des organischen Materials;
- Zuführen von Dampf in den Reaktor in einen Dampfzufuhrbereich, um die Temperatur auf eine Temperatur von über 100 Grad zu erhöhen;
- Aufrechterhalten des Drucks im Reaktor für einen festgelegten Zeitraum,
- Zuführen von Wasser in den Reaktor in einen Abkühlbereich, um die Temperatur auf eine Temperatur von unter 100 Grad zu senken, und
- Abgeben des organischen Materials in einen Ausgabebereich.

2. Verfahren nach Anspruch 1, umfassend den Schritt der Zuführung eines chemischen Stoffs in einen chemischen Zuführungsbereich des Reaktors.

3. Verfahren nach Anspruch 1 oder 2, wobei die Temperatur des in den Abkühlungsbereich zugeführten Wassers zwischen 1 und 100 Grad beträgt.

4. Verfahren nach einem der vorangehenden Ansprüche, wobei der Röhrenreaktor mindestens einen horizontalen Abschnitt umfasst, in dem das biologische Material in eine horizontale Richtung fließt, und / oder mindestens einen vertikalen Abschnitt, in dem das biologische Material in eine vertikale Richtung fließt.

5. Verfahren nach einem der vorangehenden Ansprüche, wobei sich der Dampfzufuhrbereich stromaufwärts des Abkühlungsbereichs befindet.

6. Verfahren nach einem der vorangehenden Ansprüche, wobei das organische Material kontinuierlich von dem Zuführungsbereich zum Abgabebereich durch den Dampfzufuhrbereich und den Abkühlungsbereich zugeführt wird.

7. Verfahren nach einem der vorangehenden Ansprüche, wobei der Reaktor derart gestaltet ist und gesteuert wird, dass ein festgelegter Mindestzeitraum vergeht, wenn das organische Material von dem Dampfzufuhrbereich zum Abkühlungsbereich zugeführt wird.

8. Verfahren nach einem der vorangehenden Ansprüche, ferner umfassend die Schritte:
- Approximieren des in den Röhrenreaktor zugeführten Feststoffanteils des biologischen Materials, und
- Zuführen von Wasser in den Abkühlungsbereich, um zu gewährleisten, dass der Feststoffanteil des verarbeiteten biologischen Materials, das den Röhrenreaktor verlässt, auf einem festgelegten Level ist.

9. Verfahren nach einem der vorangehenden Ansprüche, wobei das organische Material einen Feststoffanteil von 1 - 50 % im Schlamm definiert, der in den Zuführungsbereich eingespeist wird.

10. Verfahren nach einem der vorangehenden Ansprüche, wobei das organische Material einen Feststoffanteil von mindestens 20 % im Schlamm definiert, der in den Zuführungsbereich eingespeist wird.

11. Vorrichtung zur kontinuierlichen Hydrolyse von Schlamm, umfassend ein organisches Material, wobei die Vorrichtung einen Röhrenreaktor umfasst mit:
- einem Einlass zur Zuführung von Schlamm in den Reaktor in einen Zuführungsbereich davon,
- einem Einlass zur Zuführung von Dampf in den Reaktor in einen Dampfzuführungsbereich davon,
- einem Einlass zur Zuführung von Kühlwasser in den Reaktor in einen Abkühlungsbereich davon, und
- einem Auslass um verarbeiteten Schlamm den Austritt aus dem Reaktor zu ermöglichen.

12. Vorrichtung nach Anspruch 11, wobei der Reaktor einen Einlass zur Zuführung eines chemischen Stoffs in den Reaktor in einen chemischen Zuführungsbereich davon umfasst.

13. Vorrichtung nach Anspruch 11 oder 12, wobei die Vorrichtung eine Steuerungseinheit umfasst, die geeignet ist zu steuern:
- Zuführen von Schlamm in den Schlammzuführungsbereich, um den Druck zu erhöhen und eine Temperatur von über 100 Grad Celsius zu ermöglichen, ohne Sieden des organischen Materials im Röhrenreaktor, und
- Zuführen von Dampf in den Dampfzufuhrbereich, um die Temperatur zu erhöhen.

14. Vorrichtung nach Anspruch 13, wobei der Reaktor geeignet ist, einen Rückfluss des Kühlwassers in eine Richtung stromaufwärts des Reaktors zu verhindern.

15. Vorrichtung nach Anspruch 13 oder 14, wobei die Steuerungseinheit geeignet ist, die Zuführung vom Kühlwasser in den Abkühlungsbereich zu steuern, um die Temperatur auf unter 100 Grad Celsius zu senken.

16. Vorrichtung nach irgendeinem der Ansprüche 11 - 15, wobei sich der Dampfeinlass stromaufwärts vom Kühlwassereinlass befindet.

17. Vorrichtung nach irgendeinem der Ansprüche 13 -16, ferner umfassend Mittel zur Bestimmung des Feststoffanteils des biologischen Materials, das in den Röhrenreaktor eintritt, und wobei die Steuerungseinheit geeignet ist, Kühlwasser in den Abkühlungsbereich zuzuführen, um zu ermöglichen, dass biologisches Material, das den Röhrenreaktor verlässt, einen festgelegten Feststoffanteil aufweist.

18. Vorrichtung nach irgendeinem der Ansprüche 11 - 17, ferner umfassend Mittel zur Vermeidung von Ablagerungen in einem oder mehreren der Einlässe der Vorrichtung, wobei das Mittel geeignet ist, ein Öl in die Einlässe einzuspeisen, wenn der Reaktor abgeschaltet ist.

## Revendications

1. Procédé permettant de mettre en oeuvre l'hydrolyse thermique continue d'une boue comprenant une matière organique dans un réacteur tubulaire, comprenant sans interruption :
- l'introduction de la matière organique dans une zone d'alimentation du réacteur, de manière à ce que la pression augmente et qu'une température supérieure à 100 degrés Celsius puisse être atteinte sans ébullition de la matière organique ;
- l'introduction de vapeur d'eau dans le réacteur dans une zone d'alimentation en vapeur d'eau, de manière à ce que la température augmente jusqu'à une température supérieure à 100 degrés ;
- le maintien de la pression dans le réacteur pendant une période de temps prédéterminée ;
- l'introduction d'eau dans le réacteur dans une zone de refroidissement de manière à ce que la température diminue jusqu'à une température inférieure à 100 degrés, et
- la sortie de la matière organique dans une zone de sortie.

2. Procédé selon la revendication 1, comprenant l'étape d'introduction d'un agent chimique dans une zone d'alimentation en produit chimique du réacteur.

3. Procédé selon la revendication 1 ou 2, dans lequel la température de l'eau introduite dans la zone de refroidissement est située entre 1 et 100 degrés.

4. Procédé selon l'une quelconque des revendications précédentes, dans lequel le réacteur tubulaire comprend au moins une partie horizontale dans laquelle la matière biologique s'écoule dans une direction horizontale et/ou au moins une partie verticale dans laquelle la matière biologique s'écoule dans une direction verticale.

5. Procédé selon l'une quelconque des revendications précédentes, dans lequel la zone d'alimentation en vapeur d'eau se trouve en amont de la zone de refroidissement.

6. Procédé selon l'une quelconque des revendications précédentes, dans lequel la matière organique passe en continu de la zone d'alimentation vers la zone de sortie via la zone d'alimentation en vapeur d'eau et la zone de refroidissement.

7. Procédé selon l'une quelconque des revendications précédentes, dans lequel le réacteur est conçu et régulé de manière à ce qu'une période de temps minimale prédéterminée s'écoule quand la matière organique passe de la zone d'alimentation en vapeur d'eau vers la zone de refroidissement.

8. Procédé selon l'une quelconque des revendications précédentes, comprenant en outre les étapes suivantes :
- l'estimation de la teneur en solides secs de la matière biologique introduite dans le réacteur tubulaire, et
- l'introduction d'eau dans la zone de refroidissement afin de s'assurer que la teneur en solides secs de la matière biologique traitée sortant du réacteur tubulaire est à un niveau prédéterminé.

9. Procédé selon l'une quelconque des revendications précédentes, dans lequel la matière organique définit une teneur en solides secs de 1 % à 50 % dans la boue qui est introduite dans la zone d'alimentation.

10. Procédé selon l'une quelconque des revendications précédentes, dans lequel la matière organique définit une teneur en solides secs d'au moins 20 % dans la boue qui est introduite dans la zone d'alimentation.

11. Appareil permettant l'hydrolyse continue d'une boue comprenant une matière organique, l'appareil comprenant un réacteur tubulaire doté :
- d'un orifice d'entrée pour introduire une boue dans le réacteur dans une zone d'alimentation de celui-ci,
- d'un orifice d'entrée pour introduire de la vapeur d'eau dans le réacteur dans une zone d'alimentation en vapeur d'eau de celui-ci,
- d'un orifice d'entrée pour introduire de l'eau de refroidissement dans le réacteur dans une zone de refroidissement de celui-ci, et
- d'un orifice de sortie pour permettre à la boue traitée de sortir du réacteur.

12. Appareil selon la revendication 11, dans lequel le réacteur comprend un orifice d'entrée pour introduire un agent chimique dans le réacteur dans une zone d'alimentation en produit chimique de celui-ci.

13. Appareil selon la revendication 11 ou 12, dans lequel l'appareil comprend une unité de commande capable de commander :
- l'introduction d'une boue dans la zone d'alimentation en boue, de manière à ce que la pression augmente et qu'une température supérieure à 100 degrés Celsius puisse être atteinte sans ébullition de la matière organique dans le réacteur tubulaire ; et
- l'introduction de vapeur d'eau dans la zone d'alimentation en vapeur d'eau de manière à ce que la température augmente.

14. Appareil selon la revendication 13, dans lequel le réacteur est conçu pour que le reflux de l'eau de refroidissement dans une direction amont du réacteur soit évité.

15. Appareil selon la revendication 13 ou 14, dans lequel l'unité de commande est conçue pour réguler l'introduction de l'eau de refroidissement dans la zone de refroidissement de manière à ce que la température diminue jusqu'à une température inférieure à 100 degrés.

16. Appareil selon l'une quelconque des revendications 11 à 15, dans lequel l'orifice d'entrée pour la vapeur d'eau se trouve en amont de l'orifice d'entrée de l'eau de refroidissement.

17. Appareil selon l'une quelconque des revendications 13 à 16, comprenant en outre un moyen pour déterminer la teneur en solides secs de la matière biologique entrant dans le réacteur tubulaire, et dans lequel l'unité de commande est conçue pour introduire de l'eau de refroidissement dans la zone de refroidissement afin de s'assurer que la matière biologique sortant du réacteur tubulaire présente une teneur en solides secs prédéterminée.

18. Appareil selon l'une quelconque des revendications 11 à 17, comprenant en outre un moyen pour empêcher la formation d'un dépôt dans un ou plusieurs des orifices d'entrée de l'appareil, ledit moyen étant conçu pour introduire une huile dans les orifices d'entrée quand le réacteur est à l'arrêt.
